# EUROPÄISCHE PATENTSCHRIFT

(11) **EP 3 699 442 B1**
(45) Veröffentlichungstag und Bekanntmachung des Hinweises auf die Patenterteilung: **28.09.2022**
(21) Anmeldenummer: 20158342.4
(22) Anmeldetag: 19.02.2020
(51) Int. Cl.: F16D 1/027, F16C 3/02, F16H 55/17, F16H 57/00

(54) **WELLE**
SHAFT
ARBRE

(30) Priorität: 21.02.2019 DE 102019202337
(43) Veröffentlichungstag der Anmeldung: 26.08.2020
(73) Patentinhaber: ZF Friedrichshafen AG, 88046 Friedrichshafen (DE)
(72) Erfinder: Scheufler, Maximilian, 88682 Salem (DE); Fischer, Rainer, 88213 Ravensburg (DE); Betz, Andreas, 88677 Markdorf (DE)
(74) Vertreter: ZF Friedrichshafen AG

(56) Entgegenhaltungen:
- DE-A1-102008 016 161
- DE-A1-102008 064 267
- DE-A1-102009 035 726
- DE-A1-102013 225 714
- US-A- 6 023 830

## Beschreibung

Die vorliegende Erfindung bezieht sich auf eine Welle mit einem Hohlwellenelement und ein mit dem Hohlwellenelement durch eine Schweißnaht verbundenes weiteres Wellenelement.

Bei verschiedenen Anwendungsbereichen, wie beispielsweise in Nutzfahrzeugen, ist es teilweise durch einen begrenzten Bauraum und Einschränkungen beim Fertigungsprozess nicht möglich, eine Welle in einem Stück zu fertigen. Dadurch wird es notwendig einzelne, die Welle bildende Wellenelemente so miteinander zu verbinden, dass im Betrieb der Welle auftretende Biegeumlauf- und Torsionslasten über die geforderte Lebensdauer der Welle übertragen werden können.

Als Verbindungstechniken sind verschiede Füge-, Schrumpf und Schweißverfahren bekannt. Hierbei soll mit einem möglichst wirtschaftlichen Fertigungsverfahren eine gleichzeitig robuste sowie hoch genaue Verbindung der die Welle bildenden Bauteile ermöglicht werden. Insbesondere wird dies durch eine Schweißkonstruktion erreicht, wobei die einzelnen, ggf. hohl ausgeführten, Bauteile mittels Laserschweißverfahren an ein oder mehreren Axial- oder Radialschweißstellen miteinander verbunden werden.

In diesem Zusammenhang offenbart die DE 10 2008 064 267 A1 eine Hohlwelle für ein Getriebe eines Kraftfahrzeugs, bei der zwei aufeinanderfolgende Wellenabschnitte durch Reibschweißen miteinander verbunden sind. Der reibverschweißte Bereich ist dazu als axialer Steckbereich ausgeformt, in dem die miteinander reibverschweißten Enden der Wellenabschnitte koaxial ineinander greifen.

Die DE 10 2008 016 161 A1 beschreibt eine Welle für ein Getriebe eines Kraftwagens mit einem als Gussbauteil ausgeführten Wellenkörper und zumindest einem mit dem Wellenkörper drehfest verbundenen Zahnrad. Das Zahnrad ist dabei als Hohlrad ausgebildet und stoffschlüssig mit dem Wellenkörper verbunden, beispielsweise mittels Elektronenstrahlschwei ßens.

Die DE 10 2009 035 726 A1 offenbart ein Verfahren zum Herstellen einer Schweißverbindung zwischen zwei Bauteilen einer Getriebewelle. Dabei werden die zwei Bauteile an zu verschweißenden Fügeflächen aneinander angelegt und mittels eines Energiestrahls entlang einer durch die zwei Fügeflächen gebildeten Fügestelle verschweißt. Um eine Schrumpfung beim Abkühlen der Schweißstelle zu reduzieren, ist eine Anschlagstelle vorgesehen, welche durch zwei korrespondierende und geringer als ein Schrumpfweg der Schweißnaht in Schrumpfrichtung voneinander beabstandete Anschlagsflächen der Bauteile gebildet wird. DE 10 2009 035726 A1 offenbart eine Welle gemäß dem Oberbegriff des Anspruchs 1.

Die DE 10 2013 225 714 A1 zeigt eine Getriebewelle für ein Schaltgetriebe, die aus mehrerer stumpf miteinander pressverschweißten Hohlwellenabschnitten besteht, wobei zumindest einige der Hohlwellenabschnitte Festräder mit jeweils einer Schrägverzahnung aufweisen. Während des axialen Zusammenfügens mit dem benachbarten Hohlwellenabschnitt werden die mit einer Schrägverzahnung versehenen Hohlwellenabschnitte jeweils proportional zu einer Abweichung von ihrer axialen Sollposition um einen Korrekturwinkel um ihre Mittelachse gedreht.

Die US 6 023 830 A offenbart eine einstückige Hohlwelle, die an ihren beiden axialen Endabschnitten gegenüber dem axial mittleren Abschnitt verjüngt ist. An den beiden Endabschnitten sind z.B. mittels Schweißens Kardengelenke angeordnet.

Bei dem hier geschilderten Aufbau der Welle und den eingesetzten Schweißverfahren kommt es jedoch an der Schweißnaht zu verfahrensbedingten Kerben. Die Kerben können zu einer Schwächung der Welle im Bereich der Schweißnaht führen. Aus diesem Grund werden herkömmlich kritische Nahtbereiche durch spanende Fertigungsverfahren entfernt. Hierdurch kann eine Verbesserung der Wellen- bzw. Bauteilfestigkeit erreicht werden.

Durch einen Aufbau der Welle und der oben beschriebenen Forderungen nach einem möglichst wirtschaftlichen Fertigungsverfahren ist es jedoch unvorteilhaft, Schweißnähte spanend nachzuarbeiten.

Die vorliegende Erfindung betrifft ein Hohlwellenelement zur Verbindung mit einem weiteren Wellenelement durch Schweißen. Das Hohlwellenelement weist einen ersten Endabschnitt, einen dem ersten Endabschnitt in Längsrichtung des Hohlwellenelements gegenüberliegenden zweiten Endabschnitt, an dem eine Schweißnaht anzuordnen ist, und ein sich in der Längsrichtung durch das Hohlwellenelement erstreckendes Loch auf. Das Loch weist eine Durchmesseraufweitung zwischen dem ersten und dem zweiten Endabschnitt auf. Schweißen ist hier ein unlösbares Verbinden von Bauteilen unter Anwendung von Wärme. Zum Schweißen kann auch Druck angewandt werden. Das Schweißen kann mit Schweißzusatzwerkstoffen oder ohne diese erfolgen. Ferner kann eine Einlage beim Schweißen verwendet werden, insbesondere wenn die zu verbindenden Wellenelement unterschiedliche Werkstoffe aufweisen. Das Hohlwellenelement kann beispielsweise aus Stahl, insbesondere aus einem Einsatzstahl, hergestellt sein. Das weitere Wellenelement kann ebenfalls ein Hohlwellenelement oder aber auch ein Vollwellenelement sein. Allgemein eignet sich das Hohlwellenelement für die Übertragung einer Torsionslast, wobei das Hohlwellenelement insbesondere auch für die Übertragung einer kombinierten Torsions- und Biegeumlauflast vorteilhaft eingesetzt werden kann. Das Hohlwellenelement kann an seinem Außenumfang eine Verzahnung aufweisen. Das Hohlwellenelement kann beispielsweise Teil einer Vorgelegewelle sein. Ferner kann das Hohlwellenelement beispielsweise Teil eines Antriebsstrangs eines Fahrzeugs mit elektrischem Antrieb sein. Ein Hohlwellenelement ist eine im Wesentlichen zylindrische Welle mit einem Loch in deren Längsrichtung. Das Loch kann ein Durchgangsloch oder ein Sackloch sein. Die Längsrichtung gibt nicht zwingend eine Richtung einer längsten Ausdehnung des Hohlwellenelements an. Vielmehr kann die Längsrichtung parallel zu einer Mittelachse des Hohlwellenelements verlaufen bzw. mit dieser übereinstimmen, wobei das Hohlwellenelement rotationssymmetrisch um die Mittelachse ausgebildet ist. Der erste und zweite Endabschnitt weisen dann, wenn das Hohlwellenelement von außen in der Längsrichtung betrachtet wird, einen kreisförmigen Querschnitt auf. Wie oben dargelegt, weist das Loch eine Durchmesseraufweitung auf. Eine Innenkontur des Hohlwellenelements weist in der Längsrichtung eine Einbuchtung auf bzw. das Loch in dem Hohlwellenelement eine zu der Einbuchtung der Innenkontur korrespondierende Ausbauchung. Die Kontur beschreibt hier eine Linie, durch die ein Bauteil begrenzt ist. Die Innenkontur ist damit die Umrisslinie der Oberfläche des Lochs im Inneren des Hohlwellenelements. Das heißt, die Innenkontur ist die Linie, welche im Querschnitt des Hohlwellenelements die Oberfläche des Lochs markiert. Bezüglich einer Mittelachse des Hohlwellenelements kann sich die Innenkontur des Lochs wegen der Durchmesseraufweitung mit kleiner werdendem Abstand zur Schweißnaht hin verjüngen.

Insbesondere bei einem auf Torsion und Biegung belasteten, rotierenden Hohlwellenelement konzentrieren sich Spannungen auf äußere Randbereiche des Hohlwellenelements. Durch die oben beschriebene Ausgestaltung des Hohlwellenelements wird die Schweißnaht, insbesondere ein Nahtwurzelbereich der Schweißnaht, entlastet. Dies führt zu einer Lebensdauersteigerung der Schweißnaht. Darüber hinaus führt auch die gezielte Schwächung der Bauteilstruktur im Schweißnahtbereich zu einer Entlastung in diesem Bereich und somit zu einer Erhöhung einer Bauteilfestigkeit bzw. Zuverlässigkeit der Schweißnaht. Die Durchmesseraufweitung kann also so ausgestaltet sein, dass eine Belastung der Schweißnaht verglichen mit einem Hohlwellenelement ohne die Durchmesseraufweitung verringert ist. Eine Nachbehandlung der Schweißnaht, wie oben mit Bezug zum Stand der Technik beschrieben, ist somit nicht mehr zwingend erforderlich. Ferner führt die Durchmesseraufweitung des Lochs zur einer Materialreduktion und damit zu einer verringerten Masse des Hohlwellenelements im Vergleich zu herkömmlichen Hohlwellenelementen ohne eine solche Durchmesseraufweitung.

Ferner kann sich ausgehend von dem ersten Endabschnitt ein Querschnitt des Lochs auf einen maximalen Durchmesser aufweiten und sich von dem maximalen Durchmesser ausgehend zu dem zweiten Endabschnitt hin verringern. Mit Querschnitt ist hier eine Ebene gemeint, auf der die Längsrichtung des Hohlwellenelements senkrecht steht.

Ferner kann sich eine Außenkontur des Hohlwellenelements zum zweiten Endabschnitt hin verjüngen. Die obigen Ausführungen zur Innenkontur treffen auch auf die Außenkontur zu. Dies führt zu einer weiteren Verringerung der Schweißnahtbelastung. Die Au-ßenkontur kann der Innenkontur folgen.

Ein Innendurchmesser des Hohlwellenelements im Bereich des ersten Endabschnitts und ein Innendurchmesser des Hohlwellenelements im Bereich des zweiten Endabschnitts kann kleiner sein als ein Innendurchmesser des Hohlwellenelements im Bereich der Durchmesseraufweitung. Der Innendurchmesser entspricht dabei einem (Au-ßen-)Durchmesser des Lochs. Der Innendurchmesser entspricht ferner dem doppelten Abstand der Innenkontur zur Mittelachse des Hohlwellenelements senkrecht zur Längsrichtung gemessen. Der Innendurchmesser im Bereich des ersten Endabschnitts und der Innendurchmesser im Bereich des zweiten Endabschnitts können gleich groß sein. Der Innendurchmesser im Bereich des ersten Endabschnitts kann größer sein als der Innendurchmesser im Bereich des zweiten Endabschnitts.

Ferner betrifft die Erfindung eine Welle mit dem oben beschriebenen Hohlwellenelement und ein mit dem Hohlwellenelement durch eine Schweißnaht an einem zweiten Endabschnitt des Hohlwellenelements verbundenes weiteres Wellenelement. Die Schweißnaht kann durch Laserstrahlschweißen oder Reibschweißen ausgebildet sein. Bei dem Laserstrahlschweißen oder Laserschweißen erfolgt die Energiezuführung über einen Laser. Beim Reibschweißen werden die zwei zu verschweißenden Elemente unter Druck relativ zueinander gedreht.

Das Hohlwellenelement kann ein Hohlwellenelement sein, bei dem der Innendurchmesser im Bereich des ersten Endabschnitts und der Innendurchmesser im Bereich des zweiten Endabschnitts gleich groß sind. Die weitere Welle kann dann ein Hohlwellenelement sein, bei dem der Innendurchmesser im Bereich des ersten Endabschnitts größer ist als der Innendurchmesser im Bereich des zweiten Endabschnitts. Die oben beschriebene Welle kann eine Vorgelegewelle eines Getriebes, beispielsweise in einem Nutzfahrzeug oder einem anderen Kraftfahrzeug, sein. Alle obigen Ausführungen zum Hohlwellenelement können auch auf das weitere Wellenelement zutreffen.
- Figur 1: zeigt ein Hohlwellenelement gemäß einer ersten Ausführungsform der Erfindung.
- Figur 2: zeigt ein Hohlwellenelement gemäß einer zweiten Ausführungsform der Erfindung.
- Figur 3: zeigt eine Welle mit einem Hohlwellenelement gemäß der ersten und einem Hohlwellenelement gemäß der zweiten Ausführungsform der Erfindung.

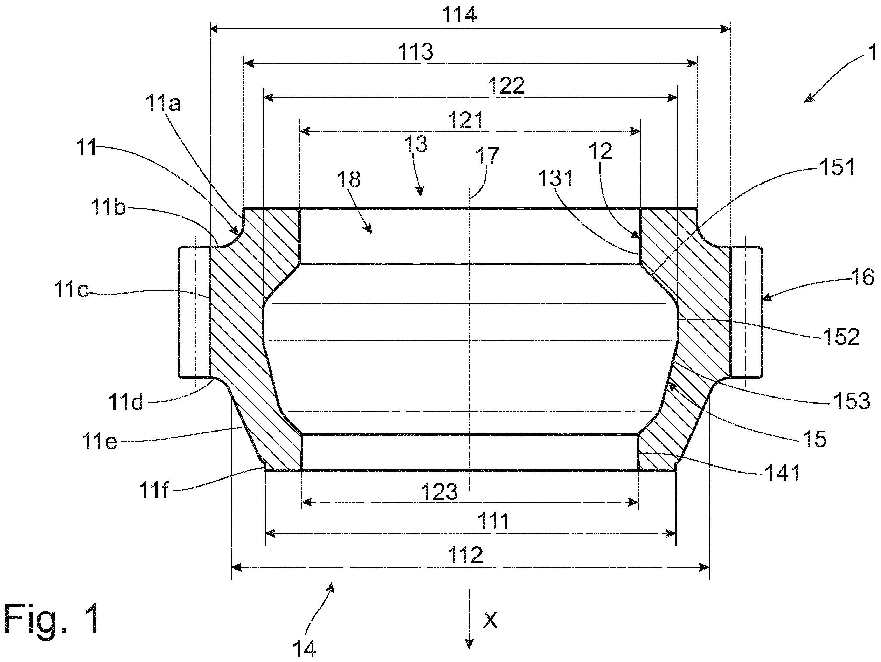

Nachfolgend wird ein Hohlwellenelement 1 gemäß einer ersten Ausführungsform der Erfindung mit Bezug zu Figur 1 beschrieben. Figur 1 ist eine Schnittansicht des Hohlwellenelements 1 gemäß einer ersten Ausführungsform der Erfindung.

Das Hohlwellenelement 1 weist eine Außenkontur 11, eine Innenkontur 12, einen ersten Endabschnitt 13, einen zweiten Endabschnitt 14, eine Durchmesseraufweitung 15 und eine Verzahnung 16 auf. Das Hohlwellenelement 1 ist um eine Mittelachse 17 rotationssymmetrisch ausgebildet. Eine Längsrichtung X des Hohlwellenelements 1 fällt mit der Mittelachse 17 zusammen und erstreckt sich von dem ersten Endabschnitt 13 zu dem zweiten Endabschnitt 14. Ferner weist das Hohlwellenelement 1 ein Durchgangsloch 18 auf. Das Durchgangsloch 18 erstreckt sich in der Längsrichtung X von dem ersten Endabschnitt 13 zu dem zweiten Endabschnitt 14. Ein Durchmesser des Durchgangslochs 18 entspricht einem Innendurchmesser des Hohlwellenelements 1.

Die Innenkontur 12 definiert eine Innenoberfläche des Hohlwellenelements 1 und somit Außenabmessungen des Durchgangslochs 18. Die Innenkontur 12 weist drei in Längsrichtung X aufeinander folgende Abschnitte auf.

In einem ersten Abschnitt 131, der im Bereich des ersten Endabschnitts 13 liegt, hat das Durchgangsloch 18 einen Durchmesser 121. Im ersten Abschnitt 131 verläuft die Innenkontur 12 parallel zur Mittelachse 17. In einem auf den ersten Abschnitt 131 in Längsrichtung X folgenden zweiten Abschnitt weist die Innenkontur 12 eine Einbuchtung auf. Die Einbuchtung der Innenkontur 12 führt zu einer Durchmesseraufweitung 15 des Durchgangsloch 18. In einem dritten Abschnitt 141, der im Bereich des zweiten Endabschnitts 14 liegt, hat das Durchgangsloch 18 einen Durchmesser 123. Im dritten Abschnitt 141 verläuft die Innenkontur 12 parallel zur Mittelachse 17. Der Durchmesser 121 des ersten Abschnitts 131 entspricht bei der vorliegenden Ausführungsform dem Durchmesser 123 des dritten Abschnitts 141.

Der Durchmesser 121 des ersten Abschnitts 131 entspricht dem Durchmesser am Anfang der Einbuchtung 15. Der Durchmesser 123 des dritten Abschnitts 141 entspricht dem Durchmesser am Ende der Einbuchtung 15.

Im Bereich der Durchmesseraufweitung 15 weist die Innenkontur 12 drei Unterabschnitte auf. Ein erster Unterabschnitt 151 erstreckt sich ausgehend von dem ersten Abschnitt 131 so, dass sich ein Durchmesser des Durchgangslochs 18 auf einen maximalen Durchmesser 122 aufweitet. In einem zweiten, mittleren Abschnitt 152 der Durchmesseraufweitung 15 verläuft die Innenkontur 12 parallel zur Mittelachse 17 mit dem maximalen Durchmesser 122. Ausgehend von dem zweiten Unterabschnitt 152 weist erstreckt sich ein dritter Unterabschnitt 153 der Durchmesseraufweitung 15 zu dem dritten Abschnitt 141 der Innenkontur 12 so, dass sich ein Durchmesser des Durchgangslochs 18 auf den Durchmesser 123 des dritten Abschnitts 141 verjüngt.

Die Außenkontur 11 des Hohlwellenelements 1 ist in sechs Abschnitte 11a, 11b, 11c, 11d, 11e, 11f unterteilt. In einem ersten Abschnitt 11a im Bereich des ersten Endabschnitts 13 weist das Hohlwellenelement 1 einen Außendurchmesser 113 auf. Im ersten Abschnitt 11a verläuft die Außenkontur 11 parallel zur Mittelachse 17 und damit auch parallel zum ersten Abschnitt 131 der Innenkontur 12.

In einem in Längsrichtung X auf den ersten Abschnitt 11a der Außenkontur 11 folgenden zweiten Abschnitt 11b verläuft die Außenkontur 11 senkrecht zur Mittelachse 17. Der erste und zweite Abschnitt 11a, 11b sind über einen abgerundeten Verbindungsabschnitt miteinander verbunden.

Der in Längsrichtung X auf den zweiten Abschnitt 11b der Außenkontur 11 folgende dritte Abschnitt 11c weist die Hohlwelle 1 die Verzahnung 16 auf. Der dritte Abschnitt 11c der Außenkontur 11 verläuft parallel zur Mittelachse 17. Im Bereich des dritten Abschnitts 11c der Außenkontur 11 weist das Hohlwellenelement 1 einen Außendurchmesser 114 auf, der größer als der Außendurchmesser 113 im Bereich des ersten Abschnitts 11a der Außenkontur 11 ist.

In einem in Längsrichtung X auf den dritten Abschnitt 11c der Außenkontur 11 folgenden vierten Abschnitt 11d verläuft die Außenkontur 11, wie im zweiten Abschnitt 11b der Außenkontur 11, wieder senkrecht zur Mittelachse 17. In einem in Längsrichtung X auf den vierten Abschnitt 11d der Außenkontur 11 folgenden fünften Abschnitt 11e verläuft die Außenkontur 11 geneigt zur Mittelachse 17 und führt zu einer Verjüngung der Außenkontur 11 in diesem Abschnitt. Der vierte und fünfte Abschnitt 11d, 11e sind über einen weiteren abgerundeten Verbindungsabschnitt miteinander verbunden. Ein Außendurchmesser 112 am Anfang des fünften Abschnitts 11e ist kleiner als der Außendurchmesser 114 im Bereich des dritten Abschnitts 11c der Außenkontur 11.

Der fünfte Abschnitt 11e der Außenkontur 11 endet in der Längsrichtung X wiederum über einen abgerundeten Verbindungsabschnitt in einem sechsten Abschnitt 11f im Bereich des zweiten Endabschnitts 14. Der sechste Abschnitt 11f der Außenkontur 11 weist dabei einen kleineren Außendurchmesser 111 auf als der Außendurchmesser 112 des fünften Abschnitts 11e. Der sechste Abschnitt 11f der Außenkontur 11 verläuft parallel zur Mittelachse 17 und damit auch parallel zum dritten Abschnitt 141 der Innenkontur 12.

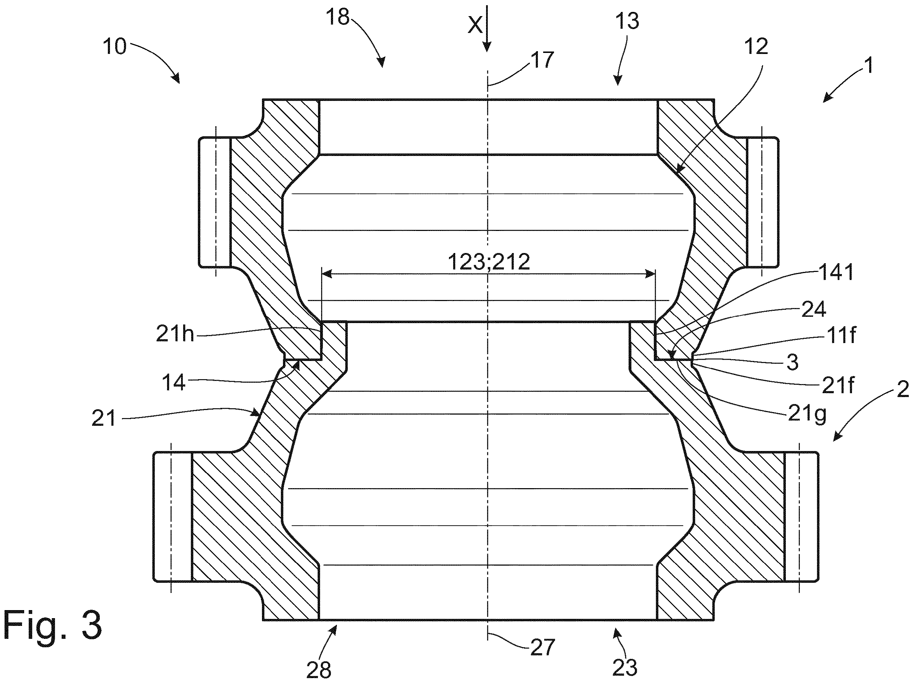

Der durch den sechsten Abschnitt 11f der Außenkontur 11 und den dritten Abschnitt 141 der Innenkontur 12 gebildete zweite Endabschnitt 14 ist zur Verbindung mit einem weiteren Hohlwellenelement 2 gemäß einer zweiten Ausführungsform der Erfindung vorgesehen. Diese Verbindung wird weiter unten im Detail mit Bezug zu Figur 3 beschrieben.

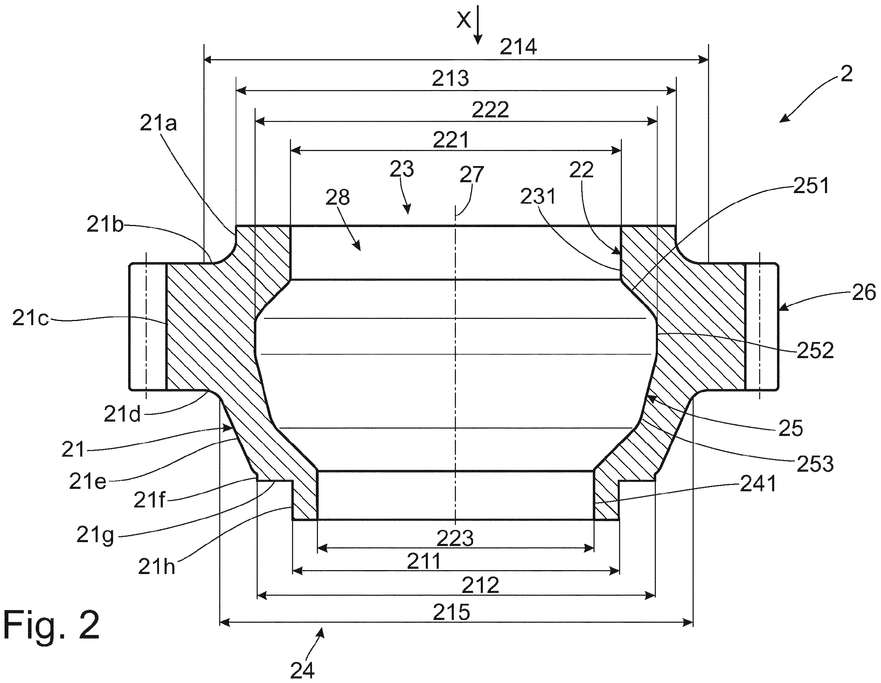

Nachfolgend wird das Hohlwellenelement 2 gemäß der zweiten Ausführungsform der Erfindung mit Bezug zu Figur 2 beschrieben. Figur 2 ist eine Schnittansicht des Hohlwellenelements 2 gemäß der zweiten Ausführungsform der Erfindung.

Das Hohlwellenelement 2 der zweiten Ausführungsform weist, wie das Hohlwellenelement 1 der ersten Ausführungsform, eine Außenkontur 21, eine Innenkontur 22, einen ersten Endabschnitt 23, einen zweiten Endabschnitt 24, eine Durchmesseraufweitung 25 und eine Verzahnung 26 auf. Das Hohlwellenelement 2 der zweiten Ausführungsform ist um eine Mittelachse 27 rotationssymmetrisch ausgebildet. Eine Längsrichtung X fällt mit der Mittelachse 27 zusammen und erstreckt sich von dem ersten Endabschnitt 23 zu dem zweiten Endabschnitt 24. Ferner weist das Hohlwellenelement 2 der zweiten Ausführungsform ein Durchgangsloch 28 auf. Das Durchgangsloch 28 erstreckt sich in der Längsrichtung X von dem ersten Endabschnitt 23 zu dem zweiten Endabschnitt 24.

Die Innenkontur 22 definiert eine Innenoberfläche des Hohlwellenelements 2 und somit Außenabmessungen des Durchgangslochs 28. Die Innenkontur 22 weist drei Abschnitte auf.

In einem ersten Abschnitt 231, der im Bereich des ersten Endabschnitts 23 liegt, hat das Durchgangsloch 28 einen Durchmesser 221. Im ersten Abschnitt 231 verläuft die Innenkontur 22 parallel zur Mittelachse 27. In einem auf den ersten Abschnitt 231 in Längsrichtung X folgenden zweiten Abschnitt weist die Innenkontur 22 eine Einbuchtung auf. Die Einbuchtung der Innenkontur 22 führt zu einer Durchmesseraufweitung 25 des Durchgangsloch 18. In einem dritten Abschnitt 241, der im Bereich des zweiten Endabschnitts 24 liegt, hat das Durchgangsloch 28 einen Durchmesser 223. Im dritten Abschnitt 241 verläuft die Innenkontur 22 parallel zur Mittelachse 27. Im Unterschied zur ersten Ausführungsform ist der Durchmesser 221 des ersten Abschnitts 231 bei der vorliegenden zweiten Ausführungsform größer als der Durchmesser 223 des dritten Abschnitts 241.

Der Durchmesser 221 des ersten Abschnitts 231 entspricht dem Durchmesser am Anfang der Einbuchtung 25. Der Durchmesser 223 des dritten Abschnitts 241 entspricht dem Durchmesser am Ende der Einbuchtung 25.

Im Bereich der Durchmesseraufweitung 25 weist die Innenkontur 22 drei Unterabschnitte auf. Ein erster Unterabschnitt 251 erstreckt sich ausgehend von dem ersten Abschnitt 231 so, dass sich ein Durchmesser des Durchgangslochs 28 auf einen maximalen Durchmesser 222 aufweitet. In einem zweiten, mittleren Abschnitt 252 der Durchmesseraufweitung 25 verläuft die Innenkontur 22 parallel zur Mittelachse 27 mit dem maximalen Durchmesser 222. Ausgehend von dem zweiten Unterabschnitt 252 weist erstreckt sich ein dritter Unterabschnitt 253 der Durchmesseraufweitung 25 zu dem dritten Abschnitt 241 der Innenkontur 22 so, dass sich ein Durchmesser des Durchgangslochs 28 auf den Durchmesser 223 des dritten Abschnitts 241 verjüngt.

Die Außenkontur 21 des Hohlwellenelements 2 ist in acht Abschnitte 21a, 21b, 21c, 21d, 21e, 21f, 21g, 21h unterteilt.

In einem ersten Abschnitt 21a im Bereich des ersten Endabschnitts 23 weist das Hohlwellenelement 2 einen Außendurchmesser 213 auf. Im ersten Abschnitt 21a verläuft die Außenkontur 21 parallel zur Mittelachse 27 und damit auch parallel zum ersten Abschnitt 231 der Innenkontur 22.

In einem in Längsrichtung X auf den ersten Abschnitt 21a der Außenkontur 21 folgenden zweiten Abschnitt 21b verläuft die Außenkontur 21 senkrecht zur Mittelachse 27. Der erste und zweite Abschnitt 21a, 21b sind über einen abgerundeten Verbindungsabschnitt miteinander verbunden.

Der in Längsrichtung X auf den zweiten Abschnitt 21b der Außenkontur 21 folgende dritte Abschnitt 21c weist die Hohlwelle 2 die Verzahnung 26 auf. Der dritte Abschnitt 21c der Außenkontur 21 verläuft parallel zur Mittelachse 27. Im Bereich des dritten Abschnitts 21c der Außenkontur 21 weist das Hohlwellenelement 2 einen Außendurchmesser 214 auf, der größer als der Außendurchmesser 213 im Bereich des ersten Abschnitts 21a der Außenkontur 21 ist.

In einem in Längsrichtung X auf den dritten Abschnitt 21c der Außenkontur 21 folgenden vierten Abschnitt 21d verläuft die Außenkontur 21 wie im zweiten Abschnitt 21b der Außenkontur 21 wieder senkrecht zur Mittelachse 27.

In einem in Längsrichtung X auf den vierten Abschnitt 21d der Außenkontur 21 folgenden fünften Abschnitt 21e verläuft die Außenkontur 21 geneigt zur Mittelachse 27 und führt zu einer Verjüngung der Außenkontur 21 in diesem Abschnitt. Der vierte und fünfte Abschnitt 21d, 21e sind über einen weiteren abgerundeten Verbindungsabschnitt miteinander verbunden. Ein Außendurchmesser 215 am Anfang des fünften Abschnitts 21e ist kleiner als der Außendurchmesser 214 im Bereich des dritten Abschnitts 21c der Au-ßenkontur 21.

Der fünfte Abschnitt 21e der Außenkontur 21 endet in der Längsrichtung X wiederum über einen abgerundeten Verbindungsabschnitt in einem sechsten Abschnitt 21f. Der sechste Abschnitt 21f der Außenkontur 21 weist dabei einen kleineren Außendurchmesser 212 auf als der Außendurchmesser 215 des fünften Abschnitts 21e. Der sechste Abschnitt 21f der Außenkontur 21 verläuft parallel zur Mittelachse 27 und damit auch parallel zum dritten Abschnitt 241 der Innenkontur 22.

Im Unterschied zur ersten Ausführungsform folgt nun auf den sechsten Abschnitt 21f der Außenkontur 22 in der Längsrichtung X noch ein siebter und achter Anschnitt 21g, 21h. Der siebte Abschnitt 21g verläuft senkrecht zur Mittelachse 27. Der siebte Abschnitt 21g führt zu einer Außendurchmesserverringerung der Außenkontur 22 von dem Außendurchmesser 212 des sechsten Abschnitts 21f auf einen Außendurchmesser 211. Der achte Abschnitt 21h der Außenkontur 22 verläuft dann parallel zur Mittelachse 27 in der Längsrichtung X. Der sechste, siebte und achte Abschnitt 21f, 21g, 21h bilden im Querschnitt des Hohlwellenelements 2 eine Stufenform.

Der durch den sechsten, siebten und achten Abschnitt 21f, 21g, 21h der Außenkontur 22 und den dritten Abschnitt 241 der Innenkontur 22 gebildete zweite Endabschnitt 24 ist zur Verbindung mit einem weiteren Hohlwellenelement 1 gemäß der ersten Ausführungsform der Erfindung vorgesehen. Diese Verbindung wird nachfolgend im Detail mit Bezug zu Figur 3 beschrieben.

Figur 3 zeigt eine Schnittansicht einer Hohlwelle 10. Die Hohlwelle 10 weist ein Hohlwellenelement 1 gemäß der ersten Ausführungsform und ein Hohlwellenelement 2 gemäß der zweiten Ausführungsform auf.

Die Hohlwelle 10 ist um eine Mittelachse 17, 27 rotationssymmetrisch ausgebildet. Die Mittelachse 17, 27 entspricht der Mittelachse 17 des Hohlwellenelements 1 der ersten Ausführungsform und der Mittelachse 27 des Hohlwellenelements 1 der zweiten Ausführungsform, die hier zusammenfallen. Eine Längsrichtung X der Hohlwelle 10 fällt mit der Mittelachse 17, 27 zusammen und erstreckt sich von dem ersten Endabschnitt 13 des Hohlwellenelements 1 der ersten Ausführungsform zu dem zweiten Endabschnitt 24 des Hohlwellenelements 2 der zweiten Ausführungsform. Ferner weist die Hohlwelle 10 ein Durchgangsloch 18, 28 auf. Das Durchgangsloch 18, 28 erstreckt sich in der Längsrichtung X des Hohlwellenelements 1 der ersten Ausführungsform zu dem zweiten Endabschnitt 24 des Hohlwellenelements 2 der zweiten Ausführungsform. Ein Durchmesser des Durchgangslochs 18, 28 entspricht einem Innendurchmesser des Hohlwellenelements 1.

Das Hohlwellenelement 2 der zweiten Ausführungsform ist in der Längsrichtung X so in das Hohlwellenelement 1 der ersten Ausführungsform eingeführt, dass die jeweiligen zweiten Endabschnitte 14, 24 der Hohlwellenelemente 1, 2 miteinander in Kontakt sind. Genauer gesagt entspricht der Außendurchmesser 211 des achten Abschnitts 21h der Außenkontur 21 des Hohlwellenelements 2 der zweiten Ausführungsform einem Innendurchmesser der Innenkontur 12 des dritten Abschnitts 141 des Hohlwellenelements 1 der ersten Ausführungsform. Der zweite Endabschnitt 14 des Hohlwellenelements 1 der ersten Ausführungsform kommt dabei in der Längsrichtung X in Anschlag mit sowohl dem siebten als auch dem achten Abschnitt 21g, 21h der Außenkontur 21 des Hohlwellenelements 2 der zweiten Ausführungsform.

Die beiden Hohlwellenelemente 1, 2 sind über eine Schweißnaht 3 miteinander verbunden. Die Schweißnaht 3 ist umlaufend am Außenumfang der beiden Hohlwellen 1, 2 vorgesehen und verbindet diese unlösbar miteinander. Genauer gesagt ist die Schweißnaht 3 im jeweiligen sechsten Abschnitt 11f, 21f der Außenkonturen 11, 21 der Hohlwellen 1, 2 vorgesehen und erstreckt sich davon ausgehend radial nach innen.

### Bezugszeichen

- 1: Hohlwellenelement
- 11: Außenkontur
- 11a: erster Abschnitt der Außenkontur
- 11b: zweiter Abschnitt der Außenkontur
- 11c: dritter Abschnitt der Außenkontur
- 11d: vierter Abschnitt der Außenkontur
- 11e: fünfter Abschnitt der Außenkontur
- 11f: sechster Abschnitt der Außenkontur
- 111: Außendurchmesser sechster Abschnitt der Außenkontur
- 112: Außendurchmesser vierter Abschnitt der Außenkontur
- 113: Außendurchmesser erster Abschnitt der Außenkontur
- 114: Außendurchmesser dritter Abschnitt der Außenkontur
- 12: Innenkontur
- 121: Durchmesser erster Abschnitt
- 122: maximaler Durchmesser im Bereich der Durchmesseraufweitung
- 123: Durchmesser dritter Abschnitt
- 13: erster Endabschnitt des Hohlwellenelements
- 131: erster Abschnitt der Innenkontur
- 14: zweiter Endabschnitt des Hohlwellenelements
- 141: dritter Abschnitt der Innenkontur
- 15: Durchmesseraufweitung (zweiter Abschnitt der Innenkontur)
- 151: erste Unterabschnitt der Durchmesseraufweitung
- 152: zweiter Unterabschnitt der Durchmesseraufweitung
- 153: dritter Unterabschnitt der Durchmesseraufweitung
- 16: Verzahnung
- 17: Mittelachse
- 18: Durchgangsloch
- 2: Hohlwellenelement
- 21: Außenkontur
- 21a: erster Abschnitt der Außenkontur
- 21b: zweiter Abschnitt der Außenkontur
- 21c: dritter Abschnitt der Außenkontur
- 21d: vierter Abschnitt der Außenkontur
- 21e: fünfter Abschnitt der Außenkontur
- 21f: sechster Abschnitt der Außenkontur
- 21g: siebter Abschnitt der Außenkontur
- 21h: achter Abschnitt der Außenkontur
- 211: Außendurchmesser achter Abschnitt der Außenkontur
- 212: Außendurchmesser siebter Abschnitt der Außenkontur
- 213: Außendurchmesser erster Abschnitt der Außenkontur
- 214: Außendurchmesser dritter Abschnitt der Außenkontur
- 215: Außendurchmesser Anfang fünfter Abschnitt der Außenkontur
- 22: Innenkontur
- 221: Durchmesser erster Abschnitt
- 222: maximaler Durchmesser im Bereich der Durchmesseraufweitung
- 223: Durchmesser dritter Abschnitt
- 23: erster Endabschnitt des Hohlwellenelements
- 231: erster Abschnitt der Innenkontur
- 24: zweiter Endabschnitt des Hohlwellenelements
- 241: dritter Abschnitt der Innenkontur
- 25: Durchmesseraufweitung (zweiter Abschnitt der Innenkontur)
- 251: erste Unterabschnitt der Durchmesseraufweitung
- 252: zweiter Unterabschnitt der Durchmesseraufweitung
- 253: dritter Unterabschnitt der Durchmesseraufweitung
- 26: Verzahnung
- 27: Mittelachse
- 28: Durchgangsloch
- 3: Schweißnaht
- X: Längsrichtung

## Patentansprüche

1. Welle mit einem ersten Hohlwellenelement (1) das mit einem zweiten Hohlwellenelement (2) verbunden ist durch Schweißen, wobei das erste und das zweite Hohlwellenelement (1; 2) jeweils einen ersten Endabschnitt (13; 23), einen dem ersten Endabschnitt (13; 23) in Längsrichtung (X) des Hohlwellenelements (1; 2) gegenüberliegenden zweiten Endabschnitt (14; 24), an dem eine Schweißnaht (3) anzuordnen ist, und ein sich in der Längsrichtung (X) durch das erste und das zweite Hohlwellenelement (1; 2) erstreckendes Loch (18; 28) aufweisen, wobei das Loch (18; 28) eine Durchmesseraufweitung (15; 25) zwischen dem ersten und dem zweiten Endabschnitt (13, 14; 23, 24) aufweist und wobei die Schweißnaht (3) mit dem zweiten Endabschnitt (14; 24) des ersten Hohlwellenelements (1) das zweite Hohlwellenelement (2) verbindet, **dadurch gekennzeichnet, dass** sich eine Außenkontur (11; 12) des ersten und des zweiten Hohlwellenelements (1; 2) zum zweiten Endabschnitt hin (14; 24) verjüngt, dass ein Innendurchmesser (121; 221) des ersten Hohlwellenelements (1) im Bereich des ersten Endabschnitts (13; 23) und ein Innendurchmesser des ersten Hohlwellenelements (1) im Bereich des zweiten Endabschnitts (14; 24) kleiner sind als ein Innendurchmesser des ersten Hohlwellenelements (1) im Bereich der Durchmesseraufweitung (15; 25) und
dass der Innendurchmesser (121) des ersten und des zweiten Hohlwellenelements (1; 2) im Bereich des ersten Endabschnitts (13) und der Innendurchmesser des ersten und des zweiten Hohlwellenelements (1; 2) im Bereich des zweiten Endabschnitts (14) gleich groß sind.

2. Welle nach Anspruch 1, **dadurch gekennzeichnet, dass** sich ausgehend von dem ersten Endabschnitt (13; 23) ein Querschnitt des Lochs (18; 28) auf einen maximalen Durchmesser aufweitet und sich von dem maximalen Durchmesser ausgehend zu dem zweiten Endabschnitt (14; 24) hin verringert.

3. Welle nach Anspruch 2, **dadurch gekennzeichnet, dass** der Innendurchmesser (221) im Bereich des ersten Endabschnitts (23) größer ist als der Innendurchmesser (228) im Bereich des zweiten Endabschnitts (24).

4. Welle nach einem der Ansprüche 1 bis 3, wobei das Loch ein Durchgangsloch (18; 28) ist.

5. Welle nach Anspruch 1 bis 4, wobei die Schweißnaht (3) durch Laserstrahlschweißen ausgebildet ist.

6. Welle nach Anspruch 1 bis 5, wobei die Schweißnaht (3) durch Reibschweißen ausgebildet ist.

7. Welle nach einem der Ansprüche 1 bis 6, wobei die Welle eine Vorgelegewelle eines Getriebes ist.

## Claims

1. Shaft with a first hollow shaft element (1) which is connected to a second hollow shaft element (2) by welding, wherein the first and the second hollow shaft element (1; 2) each have a first end portion (13; 23), a second end portion (14; 24), which is situated opposite the first end portion (13; 23) in a longitudinal direction (X) of the hollow shaft element (1; 2) and at which a weld seam (3) is to be arranged, and a hole (18; 28) extending in the longitudinal direction (X) through the first and the second hollow shaft element (1; 2), wherein the hole (18; 28) has a diameter widening (15; 25) between the first and the second end portion (13, 14; 23, 24) and wherein the weld seam (3) connects the second hollow shaft element (2) to the second end portion (14; 24) of the first hollow shaft element (1), **characterized in that** an outer contour (11; 12) of the first and of the second hollow shaft element (1; 2) tapers towards the second end portion (14; 24), **in that** an inside diameter (121; 221) of the first hollow shaft element (1) in the region of the first end portion (13; 23) and an inside diameter of the first hollow shaft element (1) in the region of the second end portion (14; 24) are smaller than an inside diameter of the first hollow shaft element (1) in the region of the diameter widening (15; 25), and **in that** the inside diameter (121) of the first and of the second hollow shaft element (1; 2) in the region of the first end portion (13) and the inside diameter of the first and of the second hollow shaft element (1; 2) in the region of the second end portion (14) are the same size.

2. Shaft according to Claim 1, **characterized in that**, taking a first end portion (13; 23) as a starting point, a cross section of the hole (18; 28) widens to a maximum diameter and decreases from the maximum diameter to the second end portion (14; 24).

3. Shaft according to Claim 2, **characterized in that** the inside diameter (221) in the region of the first end portion (23) is larger than the inside diameter (228) in the region of the second end portion (24).

4. Shaft according to one of Claims 1 to 3, wherein the hole is a through-hole (18; 28).

5. Shaft according to Claims 1 to 4, wherein the weld seam (3) is formed by selective laser welding.

6. Shaft according to Claims 1 to 5, wherein the weld seam (3) is formed by friction welding.

7. Shaft according to one of Claims 1 to 6, wherein the shaft is a countershaft of a transmission.

## Revendications

1. Arbre comprenant un premier élément d'arbre creux (1) qui est relié à un deuxième élément d'arbre creux (2) par soudage, le premier et le deuxième élément d'arbre creux (1 ; 2) présentant chacun une première section d'extrémité (13 ; 23), une deuxième section d'extrémité (14 ; 24) opposée à la première section d'extrémité (13 ; 23) dans la direction longitudinale (X) de l'élément d'arbre creux (1 ; 2), sur laquelle un joint de soudure (3) doit être agencé, et un trou (18 ; 28) s'étendant dans la direction longitudinale (X) à travers le premier et le deuxième élément d'arbre creux (1 ; 2), le trou (18 ; 28) présentant un élargissement de diamètre (15 ; 25) entre la première et la deuxième section d'extrémité (13, 14 ; 23, 24), et le joint de soudure (3) reliant le deuxième élément d'arbre creux (2) à la deuxième section d'extrémité (14 ; 24) du premier élément d'arbre creux (1), **caractérisé en ce qu'**un contour extérieur (11 ; 12) du premier et du deuxième élément d'arbre creux (1 ; 2) se rétrécit vers la deuxième section d'extrémité (14 ; 24),
**en ce qu'**un diamètre intérieur (121 ; 221) du premier élément d'arbre creux (1) dans la zone de la première section d'extrémité (13 ; 23) et un diamètre intérieur du premier élément d'arbre creux (1) dans la zone de la deuxième section d'extrémité (14 ; 24) sont inférieurs à un diamètre intérieur du premier élément d'arbre creux (1) dans la zone de l'élargissement de diamètre (15 ; 25) et
**en ce que** le diamètre intérieur (121) du premier et du deuxième élément d'arbre creux (1 ; 2) dans la zone de la première section d'extrémité (13) et le diamètre intérieur du premier et du deuxième élément d'arbre creux (1 ; 2) dans la zone de la deuxième section d'extrémité (14) sont de la même taille.

2. Arbre selon la revendication 1, **caractérisé en ce qu'**à partir de la première section d'extrémité (13 ; 23), une section transversale du trou (18 ; 28) s'élargit jusqu'à un diamètre maximal et diminue à partir du diamètre maximal vers la deuxième section d'extrémité (14 ; 24).

3. Arbre selon la revendication 2, **caractérisé en ce que** le diamètre intérieur (221) dans la zone de la première section d'extrémité (23) est supérieur au diamètre intérieur (228) dans la zone de la deuxième section d'extrémité (24).

4. Arbre selon l'une quelconque des revendications 1 à 3, dans lequel le trou est un trou traversant (18 ; 28).

5. Arbre selon les revendications 1 à 4, dans lequel le joint de soudure (3) est formé par soudage au laser.

6. Arbre selon les revendications 1 à 5, dans lequel le joint de soudure (3) est formé par soudage par friction.

7. Arbre selon l'une quelconque des revendications 1 à 6, dans lequel l'arbre est un arbre intermédiaire d'une boîte de vitesses.
